# FASCICULE DE BREVET EUROPEEN

(11) **EP 1 455 129 B1**
(45) Date de publication et mention de la délivrance du brevet: **11.01.2006**
(21) Numéro de dépôt: 04290580.2
(22) Date de dépôt: 03.03.2004
(51) Int. Cl.: F16L 3/127

(54) **Collier-cheville percutable**
Schelle mit einschlagbarem Dübel
Clamp with impactable plug

(30) Priorité: 07.03.2003 FR 0302864
(43) Date de publication de la demande: 08.09.2004
(73) Titulaire: Societe ram Chevilles et Fixations, 91320 Wissous (FR)
(72) Inventeur: Dubois, Laurent, 92160 Antony (FR)
(74) Mandataire: Bertrand, Didier

(56) Documents cités:
- FR-A- 1 324 652
- FR-A- 2 186 620
- FR-A- 2 825 132
- GB-A- 2 080 398
- NL-A- 7 309 522

## Description

La présente invention se rapporte à un collier-cheville destiné à maintenir les tubes contre les parois.

Un domaine d'application envisagé est notamment, mais non exclusivement celui des conduits dans lesquels circulent des fils électriques.

On connaît des colliers-chevilles destinés à supporter les tubes, ils sont généralement formés d'un anneau rigide qui présente une portion tronquée. Ladite portion tronquée peut correspondre à un demi-anneau définissant deux bords libres ainsi que l'illustre le document DE 85 24 198.9. U.

Ledit anneau comporte une cheville pleine qui en est solidaire et qui s'étend à partir d'une portion d'anneau diamétralement opposée à ladite portion tronquée dans une direction opposée à cette portion tronquée.

En outre, des moyens de liaison adaptés à relier les deux bords libres permettent de maintenir en position fixe ledit tube sur ledit collier-cheville après qu'il ait été inséré dans un perçage ménagé dans une cloison par exemple.

Cependant, le diamètre du perçage doit être déterminé précisément en fonction de ladite cheville puisque d'une part le collier-cheville doit être enfoncé manuellement dans le perçage par un opérateur doté d'une force normale et d'autre part, il doit être solidaire de la cloison après enfoncement. La portion d'anneau qui surmonte la cheville est en effet fragile ou à tout du moins déformable et elle ne peut être percutée au moyen d'un outil, tel qu'un marteau sans être détériorée. Le document NL-A-7309522 décrit un collier-cheville où la pièce de frappe s'enfonce entre les bords libres de l'anneau rigide.

Un objet de la présente invention est alors de fournir un collier-cheville qui non seulement comporte un anneau rigide tronqué prolongé par une cheville mais aussi, qui est adapté à être percuté pour enfoncer ladite cheville dans un perçage sans déformer ledit anneau rigide.

A cet effet, la présente invention propose un collier-cheville formé d'un anneau rigide qui présente une portion tronquée définissant deux bords libres et qui comporte une cheville solidaire dudit anneau s'étendant à partir d'une portion d'anneau diamétralement opposée à ladite portion tronquée dans une direction opposée à ladite portion tronquée ; ledit collier-cheville comprenant une pièce de frappe reliée par des moyens de liaison sécables et qui s'étend à partir de ladite portion d'anneau diamétralement opposée dans le prolongement de ladite cheville en dehors dudit anneau rigide entre lesdits bords libres, ladite pièce de frappe étant adaptée à être percutée en dehors dudit anneau rigide et à prendre appui contre son bord intérieur pour enfoncer à force ladite cheville dans ladite paroi et à être détachée dudit collier-cheville en coupant lesdits moyens de liaison sécables.

Ainsi, une caractéristique de l'invention réside dans l'intégration d'une pièce de frappe de type enclume qui forme un outil dans ledit anneau et qui s'étend, à partir du bord intérieur de l'anneau, lequel constitue une zone de percussion indirecte sur laquelle la pièce de frappe est adaptée à prendre appui sans déformer ledit anneau, en saillie dudit anneau entre lesdits bords libres.

De la sorte, la partie en saillie de la pièce de frappe peut être percutée de façon que ladite pièce de frappe vienne à son tour percuter le bord intérieur de l'anneau dans l'axe de la cheville sans déformer ledit anneau rigide.

En outre, la pièce de frappe est reliée aux autres éléments du collier-cheville par des moyens de liaison sécables de façon à disposer d'une seule pièce avant l'utilisation du collier-cheville et à pouvoir retirer ensuite après enfoncement ladite pièce de frappe dudit anneau en fracturant lesdits moyens de liaison sécables pour le libérer et monter le tube.

Grâce à ces caractéristiques aucun outil spécifique n'est nécessaire pour enfoncer les collier-chevilles conformes à la présente invention dans un perçage ménagé dans une paroi.

Selon un mode de mise en oeuvre de l'invention particulièrement avantageux, ledit anneau rigide s'étend latéralement selon son axe principal, sensiblement perpendiculairement à l'axe de ladite cheville en définissant deux paires de bords opposés et en ce que ladite pièce de frappe s'étend latéralement dans ledit anneau pour au moins affleurer lesdites deux paires de bords opposés. De la sorte, d'une part la portion de tube insérée dans ledit anneau sera maintenue de manière plus ferme car il présente une surface de réception plus importante et d'autre part, la pièce de frappe est adaptée à être maintenue à la main par l'opérateur au niveau des deux paires de bords opposés durant la phase de percussion indépendamment dudit anneau et de la cheville. Ainsi, si lors de la frappe les moyens de liaison sécables sont rompus, l'opérateur est susceptible de maintenir la pièce de frappe dans ledit anneau en regard dudit bord intérieur dans le prolongement de la cheville.

Selon un premier mode de réalisation de l'invention particulièrement avantageux ladite pièce de frappe présente une première extrémité située en regard dudit bord intérieur dudit anneau situé dans le prolongement de ladite cheville et une seconde extrémité située en dehors dudit anneau rigide, définissant une zone de frappe, et en ce que lesdits moyens de liaison sécables relient une portion de ladite pièce de frappe située au voisinage de ladite seconde extrémité à chacun desdits bords libres.

Ainsi, grâce à cette caractéristique, les moyens de liaison sécables sont adaptés à être sollicités et rompus en percutant ladite zone de frappe ; la percussion entraînant le déplacement relatif de la pièce de frappe et desdits bords libres.

Selon un deuxième mode de réalisation de l'invention particulièrement avantageux, ladite pièce de frappe comporte une portion de forme générale tubulaire et elle comprend une entretoise qui s'étend transversalement dans ladite portion et qui est coaxial avec ladite cheville. De la sorte, la pièce de frappe est susceptible d'être réalisée avec une faible quantité de matière tout en présentant des propriétés mécaniques adaptées pour résister à la force de percussion sans être déformée.

Selon un troisième mode de réalisation de l'invention particulièrement avantageux, ledit collier-cheville comprend une attache flexible adaptée à relier lesdits deux bords libres. Ainsi, en intégrant directement une attache flexible à l'ensemble formé de l'anneau contenant la pièce de frappe et de la cheville, il n'est nul besoin de prévoir une attache séparée dont le montage nécessite des manipulations supplémentaires et donc une perte de temps.

Avantageusement, le collier-cheville conforme à l'invention définit un volume formé de deux demi-surfaces séparées par un plan de symétrie principal coupant ladite cheville selon son axe et en ce que toute projection perpendiculaire d'un point de l'une desdites demi-surfaces sur ledit plan de symétrie principal définit un segment dont tous les points qui le constituent sont contenus dans ledit volume. De la sorte, grâce à cette caractéristique, ledit collier-cheville est adapté à être obtenu par moulage d'une seule pièce en matière plastique, à un coût avantageux compte tenu du moule qu'il requiert pour sa réalisation. Ce dernier, peut en effet comporter des empreintes fixes sans que des broches mobiles soient nécessaires puisque la dépouille de la pièce ne présente pas d'angle rentrant comme on l'expliquera plus en détail dans la suite de la description.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en section longitudinale d'un collier-cheville conforme à l'invention ;
- la Figure 2 est une vue schématique en perspective du collier-cheville représenté sur la Figure 1 ; et,
- la Figure 3 est une vue schématique en section longitudinale du collier-cheville illustré sur la Figure 1 dans lequel est monté un tube.

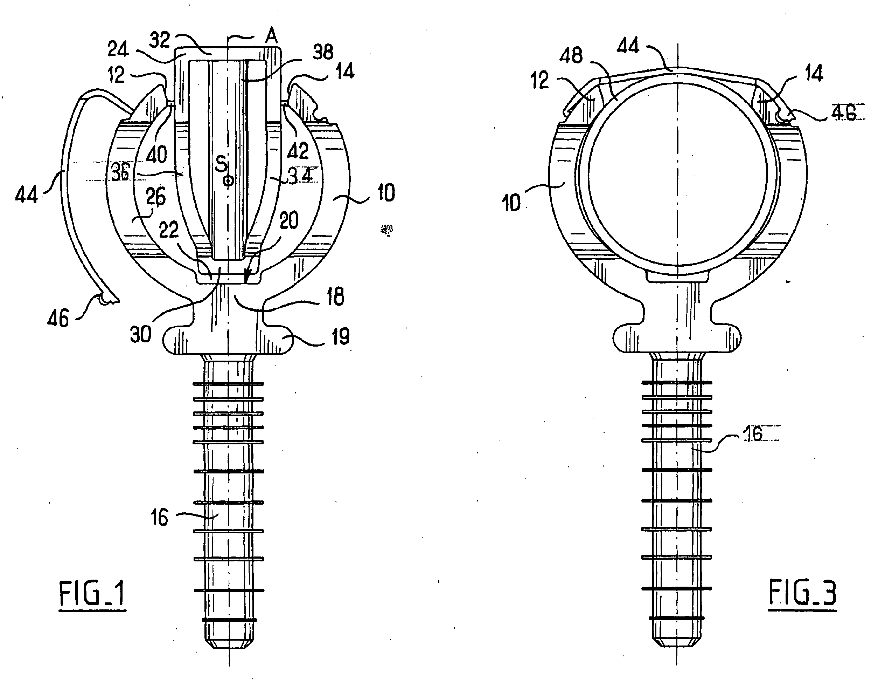

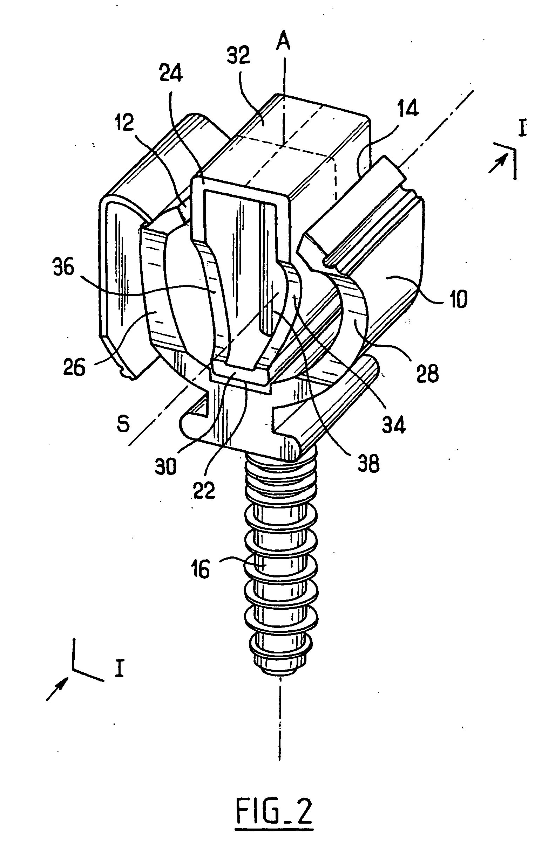

La Figure 1 est une section longitudinale d'un collier-cheville conforme à l'invention selon le plan I-I illustré sur la Figure 2 ; ledit collier-cheville est destiné à être enfoncé dans un perçage pratiqué par exemple dans une cloison.

Le collier-cheville comporte un anneau rigide 10 déformable élastiquement dont une portion tronquée forme deux bords libres 12, 14 en regard l'un de l'autre et une cheville pleine 16 et/ou non expansible d'axe A qui est reliée à une portion 18 de l'anneau rigide 10 diamétralement opposée à l'espace défini entre les deux bords libres 12, 14. Un collet 19 formant un épaulement est prévu entre la cheville et la portion 18 pour constituer une surface d'appui adapté à s'appliquer contre le bord dudit perçage.

Dans le plan de la Figure 1, l'anneau rigide 10 présente un axe de symétrie confondu avec l'axe A de la cheville 16 duquel les deux bords libres 12, 14 sont espacés d'une même distance.

Par ailleurs, un bord intérieur 20 de la portion 18 de l'anneau rigide 10 à laquelle se raccorde la cheville 16, présente un décrochement formant une large rainure 22. Cette large rainure 22 est destinée à recevoir une pièce de frappe 24 que l'on va décrire ci-après tout d'abord en référence à la Figure 2.

On retrouve sur la Figure 2, l'anneau rigide 10 qui est étendu latéralement selon son axe principal S, lequel est perpendiculaire à l'axe A de la cheville 16. L'anneau rigide 10 définit ainsi deux paires de bords opposés dont l'une constituée des premiers bords opposés 26, 28 apparaît sur la Figure 2.

La pièce de frappe 24, située dans ledit anneau rigide 10, est formée d'un organe tubulaire aplati dans une direction sensiblement perpendiculaire à l'axe A de la cheville 16 et à l'axe principal S et dont l'axe est orienté sensiblement parallèlement à cet axe principal S. Elle présente une première extrémité 30 partiellement engagée dans la large rainure 22 et située en regard dudit bord intérieur 20 et une seconde extrémité 32 en saillie de l'anneau rigide 10 entre les deux bords libres 12, 14.

Dans un autre mode particulier de réalisation de l'invention, non représenté, la première extrémité de la pièce de frappe est aiguë et elle est destinée à coopérer avec une rainure anguleuse dans laquelle elle est partiellement engagée. De la sorte, d'une part la portion d'anneau rigide à laquelle se raccorde la cheville est moins fragile car elle comporte plus de matière et d'autre part, la première extrémité vient se coincer dans la rainure anguleuse lors de la frappe, ce qui maintient parfaitement ensemble la pièce de frappe et le collier-cheville.

En référence à la Figure 2, ledit organe tubulaire s'étend latéralement selon son axe, parallèlement à l'axe principal S. Il présente deux paires de bords latéraux dont une, constituée des premiers bords latéraux 34, 36 apparaît sur la Figure 2 et affleure la surface définie par les premiers bords opposés 26, 28 de l'anneau rigide.

L'organe tubulaire et l'anneau rigide 10 présentent un plan de symétrie I-I comprenant l'axe A de la cheville 16, les paires de bords opposés et les paires de bords latéraux étant respectivement totalement symétriques les uns des autres par rapport audit plan de symétrie I-I.

En outre, les bords latéraux et les bords opposés présentent chacun une encoche en forme d'arc permettant une meilleure préhension du collier-cheville.

La Figure 2 illustre partiellement la pièce de frappe 24 qui comprend en outre une entretoise cylindrique 38 logée dans l'organe tubulaire de façon que son axe de symétrie soit confondu avec l'axe A de la cheville 16 et que l'on décrira en référence à la Figure 1.

On retrouve sur la Figure 1 l'entretoise cylindrique 38 qui s'étend entre la première extrémité 30 et la seconde extrémité 32 de la pièce de frappe 24 dans le prolongement de la cheville 16.

Par ailleurs, la pièce de frappe 24 est maintenue en position fixe par rapport à l'anneau rigide par deux pattes sécables 40, 42 qui relient respectivement les bords libres 12, 14 à l'organe tubulaire.

Ainsi, lorsque la seconde extrémité 32 qui est légèrement en saillie de l'anneau rigide 10 est percutée au moyen d'un outil usuel, par exemple un marteau, l'organe tubulaire de la pièce de frappe 24 qui est rigidifié grâce à l'entretoise 38 est entraîné en translation de telle sorte que simultanément, la première extrémité 30 vient à son tour percuter le bord intérieur 20 en s'encastrant dans la rainure 22, ce qui contribue à l'enfoncement de la cheville 16 et les bords libres 12, 14 sont libérés par rupture des pattes sécables 40, 42.

Durant la percussion il est possible de maintenir à la fois l'anneau rigide 10 pour guider la cheville 16 dans le perçage et la pièce de frappe 24 par ses bords latéraux 34, 36 qui affleurent de chaque côté de l'anneau rigide 10 entre ses bords opposés. En outre, ce maintien est rendu plus aisé grâce à la large rainure 22 qui bloque au moins partiellement la première extrémité 30 de la pièce de frappe 24.

Lorsque la cheville 16 est entièrement enfoncée dans le perçage, la pièce de frappe 24 qui est entièrement désolidarisée de l'anneau rigide 10 puisque les pattes sécables 40, 42 ont été rompues, est retirée dudit anneau dont l'espace qu'il définit est adapté à recevoir un tube.

De manière avantageuse, la portion tronquée de l'anneau rigide 10 représente une portion d'arc inférieure à son demi-périmètre de façon à pouvoir clipser la portion de tube en bénéficiant de la déformation élastique de l'anneau rigide 10, et à le maintenir au moins partiellement.

En outre, grâce à une attache flexible 44 dont une extrémité est reliée à l'anneau rigide 10 au voisinage d'un des bords libres 12 et dont l'autre extrémité présente un crochet 46 adapté à coopérer avec l'autre bord libre 14 pour en être solidaire, la portion de tube est susceptible d'être rendue prisonnière de l'anneau rigide 10.

Le collier-cheville conforme à l'invention est adapté à maintenir un tube à une distance du mur comprise entre 15 et 20 mm, par exemple 17,5 mm ; cette distance étant mesurée entre l'axe de symétrie du tube et la base du collet 19. Ainsi, le tube est adapté à coïncider avec les différents appareils ou dispositifs électriques qu'il alimente.

La Figure 3 illustre une telle situation où on retrouve l'anneau rigide 10 dans lequel est encastrée une portion de tube 48 qui est maintenue par l'attache flexible 44. L'extrémité de l'attache flexible 44 est accrochée au bord libre 14 de telle sorte qu'elle s'étire contre le tube entre les deux bords libres 12, 14, emprisonnant ainsi la portion de tube 48.

Un tel collier-cheville, comportant la pièce de frappe 24 et l'attache flexible 44 est susceptible d'être moulé d'une seule pièce en matière plastique, par exemple en polyamide.

Afin de simplifier la conception du moule dans lequel la pièce est injectée, le collier-cheville est conçu de manière symétrique par rapport au plan I-I illustré sur la Figure 2. Le plan de joint des deux parties du moule correspond audit plan I-I.

En outre, les contours du collier-cheville sont définis de façon que toute portion de surface dudit collier-cheville présente une normale dont la demi-droite orientée vers l'extérieur du volume défini par ledit collier-cheville ne coupe pas ledit plan de symétrie I-I. Ainsi, il ne présente aucun angle rentrant de sorte que le moule peut être de conception simplifiée avec uniquement des empreintes fixes.

Selon un autre mode de réalisation de l'invention non représenté, la cheville présente un évidement axial débouchant dans la rainure et son extrémité libre est fendue axialement. Ainsi, lorsque le collier-cheville est enfoncé dans l'orifice d'une paroi, la fixation est susceptible d'être renforcée par l'introduction d'une vis dans l'évidement longitudinal à partir de la rainure. Ladite vis a pour effet d'augmenter radialement les contraintes de la cheville contre la paroi interne de l'orifice.

Cependant, un tel collier-cheville ne peut être moulé d'une seule pièce, avec la pièce de frappe, que dans un moule comportant au moins une broche rétractable destinée à former ledit évidement axial. Avantageusement, ladite broche est introduite dans la partie de l'empreinte correspondant au collier du collier-cheville et elle s'étend jusque dans la partie correspondant à la cheville. En conséquence, la pièce de frappe présente un évidement longitudinal, situé au centre de l'entretoise et débouchant dans les première et seconde extrémités.

## Revendications

1. Collier-cheville destiné à maintenir un tube contre une paroi, formé d'un anneau rigide (10) présentant une portion tronquée définissant deux bords libres (12, 14) et comportant une cheville (16) solidaire dudit anneau rigide (10) qui s'étend à partir d'une portion d'anneau (18) diamétralement opposée à ladite portion tronquée dans une direction opposée à ladite portion tronquée,
comprenant une pièce de frappe (24) reliée par des moyens de liaison sécables (40, 42) et qui s'étend à partir de ladite portion d'anneau (18) diamétralement opposée dans le prolongement de ladite cheville (16) en dehors dudit anneau rigide (10) entre lesdits bords libres (12, 14), **caractérisé en ce que** ladite pièce de frappe (24) est adaptée à être percutée en dehors dudit anneau rigide (10) et à prendre appui contre son bord intérieur (20) pour enfoncer à force ladite cheville (16) dans ladite paroi et à être détachée dudit collier-cheville en coupant lesdits moyens de liaison sécables (40, 42).

2. Collier-cheville selon la revendication 1, **caractérisé en ce que** ledit anneau rigide (10) s'étend latéralement selon son axe principal S, sensiblement perpendiculairement à l'axe A de ladite cheville en définissant deux paires de bords opposés (26, 28) et **en ce que** ladite pièce de frappe (24) s'étend latéralement dans ledit anneau rigide (10) pour au moins affleurer lesdites deux paires de bords opposés (26, 28).

3. Collier-cheville selon la revendication 1 ou 2, **caractérisé en ce que** ladite pièce de frappe (24) présente une première extrémité (30) située en regard dudit bord intérieur (20) dudit anneau rigide (10) situé dans le prolongement de ladite cheville (16) et une seconde extrémité (32) située en dehors dudit anneau rigide (10), définissant une zone de frappe, et **en ce que** lesdits moyens de liaison sécables (40, 42) relient une portion de ladite pièce de frappe (24) située au voisinage de ladite seconde extrémité (32) à chacun desdits bords libres (12, 14).

4. Collier-cheville selon l'une quelconque des revendications 1 à 3, **caractérisé en ce que** ladite pièce de frappe (24) comporte une portion de forme générale tubulaire et **en ce qu'**elle comprend une entretoise (38) qui s'étend transversalement dans ladite portion et qui est coaxiale avec ladite cheville (16).

5. Collier-cheville selon l'une quelconque des revendications 1 à 4, **caractérisé en ce qu'**il comprend une attache flexible (44) adaptée à relier lesdits deux bords libres (12, 14).

6. Collier-cheville selon l'une quelconque des revendications 1 à 4, **caractérisé en ce qu'**il définit un volume formé de deux demi-surfaces séparées par un plan de symétrie principal (I-I) coupant ladite cheville selon son axe A et **en ce que** toute projection perpendiculaire d'un point de l'une desdites demi-surfaces sur ledit plan de symétrie principal (I-I) définit un segment dont tous les points qui le constituent sont contenus dans ledit volume.

7. Collier-cheville selon l'une quelconque des revendications 1 à 6, **caractérisé en ce qu'**il est obtenu par moulage d'une seule pièce en matière plastique.

## Patentansprüche

1. Dübelschelle, die dazu vorgesehen ist, ein Rohr an einer Wand zu halten, und aus einem starren Ring (10) gebildet ist, wovon ein Abschnitt ausgeschnitten ist, wodurch zwei freie Ränder (12, 14) definiert sind, und einen mit dem starren Ring (10) fest verbundenen Dübel (16) aufweist, der sich ausgehend von einem Ringabschnitt (18), der dem ausgeschnittenen Abschnitt diametral gegenüber liegt, in einer Richtung, die von dem ausgeschnittenen Abschnitt weg weist, erstreckt,
wobei die Dübelschelle ein Anschlagteil (24) umfasst, das über trennbare Verbindungsmittel (40, 42) verbunden ist und sich ausgehend von dem Ringabschnitt (18) diametral entgegengesetzt in der Verlängerung des Dübels (16) aus dem starren Ring (10) zwischen den freien Rändern (12, 14) erstreckt, **dadurch gekennzeichnet, dass** das Anschlagteil (24) so beschaffen ist, dass darauf außerhalb des starren Rings (10) geschlagen werden kann und dass es sich an dessen innerem Rand (20) abstützt, um den Dübel (16) mit Kraft in die Wand zu drängen, und von der Dübelschelle gelöst werden kann, indem die trennbaren Verbindungsmittel (40, 42) durchtrennt werden.

2. Dübelschelle nach Anspruch 1, **dadurch gekennzeichnet, dass** sich der starre Ring (10) seitlich längs seiner Hauptachse S im Wesentlichen senkrechten zur Achse A des Dübels erstreckt und dabei zwei Paare gegenüberliegender Ränder (26, 28) definiert und dass das Anschlagteil (24) im starren Ring (10) sich seitlich so erstreckt, dass es wenigstens mit den zwei Paaren gegenüberliegender Ränder (26, 28) bündig ist.

3. Dübelschelle nach Anspruch 1 oder 2, **dadurch gekennzeichnet, dass** das Anschlagteil (24) ein erstes Ende (30), das sich gegenüber dem inneren Rand (20) des starren Rings (10) befindet, der sich in der Verlängerung des Dübels (16) befindet, und ein zweites Ende (32), das sich außerhalb des starren Rings (10) befindet und eine Anschlagzone definiert, umfasst und dass die trennbaren Verbindungsmittel (40, 42) einen Abschnitt des Anschlagteils (24), der sich in der Umgebung des zweiten Endes (32) befindet, mit jedem der freien Ränder (12, 14) verbinden.

4. Dübelschelle nach einem der Ansprüche 1 bis 3, **dadurch gekennzeichnet, dass** das Anschlagteil (24) einen im Allgemeinen röhrenförmigen Abschnitt umfasst und dass sie einen Abstandshalter (38) aufweist, der sich in dem Abschnitt transversal erstreckt und zu dem Dübel (16) koaxial ist.

5. Dübelschelle nach einem der Ansprüche 1 bis 4, **dadurch gekennzeichnet, dass** sie einen flexiblen Bügel (44) aufweist, der die zwei freien Ränder (12, 14) verbinden kann.

6. Dübelschelle nach einem der Ansprüche 1 bis 4, **dadurch gekennzeichnet, dass** sie ein Volumen definiert, das aus zwei Halbflächen gebildet ist, die durch eine Hauptsymmetrieebene (I-I) getrennt sind, die den Dübel längs seiner Achse A schneidet, und dass jede senkrechte Projektion eines Punkts einer der Halbflächen auf die Hauptsymmetrieebene (I-I) ein Segment definiert, wovon alle Punkte, die es bilden, in diesem Volumen enthalten sind.

7. Dübelschelle nach einem der Ansprüche 1 bis 6, **dadurch gekennzeichnet, dass** sie durch einteiliges Formen aus Kunststoff erhalten wird.

## Claims

1. Plug-type clamp intended to hold a tube against a wall, and formed of a rigid ring (10) exhibiting a truncated portion defining two free edges (12, 14) and comprising a plug (16) secured to the said rigid ring (10) which extends from a ring portion (18) diametrically opposite the said truncated portion in a direction away from the said truncated portion, comprising a striking piece (24) connected by frangible connecting means (40, 42) and which extends from the said diametrically opposite ring portion (18) in the continuation of the said plug (16) outside of the said rigid ring (10) between the said free edges (12, 14), **characterized in that** the said striking piece (24) is designed to be struck outside of the said rigid ring (10) and to bear against its interior edge (20) in order to forcibly drive the said plug (16) into the said wall and be detached from the said plug-type clamp by cutting the said frangible connecting means (40, 42).

2. Plug-type clamp according to Claim 1, **characterized in that** the said rigid ring (10) extends laterally along its main axis S, more or less perpendicular to the axis A of the said plug, defining two pairs of opposite edges (26, 28) and **in that** the said striking piece (24) extends laterally in the said rigid ring (10) to at least lie flush with the said two pairs of opposite edges (26, 28).

3. Plug-type clamp according to Claim 1 or 2, **characterized in that** the said striking piece (24) has a first end (30) situated facing the said interior edge (20) of the said rigid ring (10) located in the continuation of the said plug (16) and a second end (32) located outside of the said rigid ring (10), defining a striking region, and **in that** the said frangible connecting means (40, 42) connect a portion of the said striking piece (24) situated in the vicinity of the said second end (32) to each of the said free edges (12, 14).

4. Plug-type clamp according to any one of Claims 1 to 3, **characterized in that** the said striking piece (24) comprises a portion of tubular overall shape and **in that** it comprises a spacer piece (38) which runs transversely in the said portion and which is coaxial with the said plug (16).

5. Plug-type clamp according to any one of Claims 1 to 4, **characterized in that** it comprises a flexible fastener (44) designed to connect the said two free edges (12, 14).

6. Plug-type clamp according to any one of Claims 1 to 4, **characterized in that** it defines a volume formed of two half-surfaces separated by a main plane of symmetry (I-I) intersecting the said plug along its axis A and **in that** any orthogonal projection of a point of one of the said half-surfaces onto the said main plane of symmetry (I-I) defines a segment of which all the constituent points lie in the said volume.

7. Plug-type clamp according to any one of Claims 1 to 6, **characterized in that** it is obtained in a single piece by moulding a plastic.
